# FASCICULE DE BREVET EUROPEEN

(11) **EP 3 995 056 B1**
(45) Date de publication et mention de la délivrance du brevet: **16.07.2025**
(21) Numéro de dépôt: 21207451.2
(22) Date de dépôt: 10.11.2021
(51) Int. Cl.: A47J 36/32

(54) **APPAREIL DE CUISSON ELECTRIQUE COMPRENANT UN OUTIL DE TRAVAIL**
ELEKTRISCHES KOCHGERÄT, DAS EIN ARBEITSWERKZEUG UMFASST
ELECTRICAL COOKING APPLIANCE COMPRISING A WORK TOOL

(30) Priorité: 10.11.2020 FR 2011507
(43) Date de publication de la demande: 11.05.2022
(73) Titulaire: SEB S.A., 69130 Ecully (FR)
(72) Inventeur: BLANDIN, Loïc, 69003 LYON (FR); PICHOT, Renaud, 69008 LYON (FR)
(74) Mandataire: SEB Développement

(56) Documents cités:
- EP-A2- 2 997 867
- US-A1- 2009 285 958
- US-A1- 2019 261 805

## Description

### Domaine technique

La présente invention concerne de manière générale un appareil de cuisson électrique pour cuire des aliments avec pression, tel qu'un autocuiseur électrique.

### Etat de la technique

Le document CN207768224U divulgue un appareil de cuisson électrique comprenant :
- une cuve de cuisson configurée pour recevoir des aliments à cuire,
- un outil de brassage magnétique monté mobile en rotation dans la cuve de cuisson, l'outil de brassage magnétique comportant une partie centrale et plusieurs bras de brassage qui s'étendent à partir de la partie centrale et qui sont configurés pour brasser des aliments contenus dans la cuve de cuisson,
- un système d'entraînement magnétique configuré pour entraîner en rotation l'outil de brassage magnétique, et
- une unité de commande configurée pour commander le fonctionnement de l'appareil de cuisson électrique.

Le système d'entraînement magnétique de l'appareil de cuisson électrique précité comporte un aimant permanent disposé en dessous de la paroi de fond de la cuve de cuisson, et un moteur électrique configuré pour entraîner en rotation l'aimant permanent de manière à entraîner en rotation l'outil de brassage magnétique.

L'appareil de cuisson électrique décrit dans le document CN207768224U comporte en outre un capteur magnétique, tel qu'un capteur à effet Hall, relié à l'unité de commande et configuré pour détecter la présence de l'outil de brassage magnétique dans la cuve de cuisson.

Un tel appareil de cuisson électrique permet donc de détecter automatiquement la présence ou non de l'outil de brassage magnétique dans la cuve de cuisson.

Toutefois, la solution décrite dans le document CN207768224U pour détecter la présence d'un outil de brassage dans la cuve de cuisson n'est applicable que pour un appareil de cuisson électrique muni d'un outil de brassage magnétique.

De plus, l'appareil de cuisson électrique décrit dans le document CN207768224U utilise un capteur dédié du type « reed switch » pour détecter la présence de l'outil de brassage et ne permet pas de surveiller l'état de transformation des aliments contenus dans la cuve de cuisson.

Il est également connu du document WO2011148982 un cuiseur à riz comportant un outil de brassage entrainé par un moteur électrique et une unité de commande apte à détecter le courant électrique traversant le moteur électrique.

Par cette mesure de courant électrique, l'unité de commande est capable de déduire une quantité de riz disposée dans la cuve de cuisson afin d'adapter la vitesse de rotation de l'outil de brassage pendant l'étape de trempage du riz.

Cependant, la loi d'asservissement de la vitesse de rotation de l'outil de brassage n'est basée que sur la comparaison entre des mesures en temps réel de la valeur du courant d'alimentation du moteur et des valeurs seuils indexées à une quantité de riz au cours d'une étape de trempage dans laquelle la consistance du riz n'est pas transformée.

Aussi un tel appareil n'est adapté que pour une étape de trempage du riz, et non à des étapes d'une recette dont la consistance des ingrédients pourrait être modifiée au cours de l'avancement de l'étape de la recette.

Le document US20190261805 décrit quant à lui un appareil de préparation culinaire dans lequel la commande de l'appareil est influencée par des paramètres de contrôle, en particulier des paramètres de contrôle du fonctionnement du moteur électrique, dont l'acquisition est réalisée au cours de la réalisation de la recette.

Cependant, ce document ne décrit pas certains paramètres de contrôle qui trouvent un intérêt particulier à être contrôlés dans un appareil de cuisson sous pression où l'accès à la cuve, une fois la montée en pression réalisée, n'est possible qu'après une décompression pour atteindre la pression atmosphérique.

### Résumé de l'invention

La présente invention vise à remédier à tout ou partie de ces inconvénients.

Le problème technique à la base de l'invention consiste notamment à fournir un appareil de cuisson électrique sous pression qui présente un coût raisonnable, qui permette d'adapter les paramètres de fonctionnement de l'appareil de cuisson en fonction de l'état de transformation de la consistance du ou des ingrédients contenus dans la cuve de cuisson au cours de l'avancement de la réalisation d'une étape d'une recette de cuisine mais aussi de détecter la présence de l'outil de travail dans la cuve de cuisson.

A cet effet, la présente invention concerne un appareil de cuisson électrique sous pression, tel qu'un autocuiseur électrique ou un multicuiseur électrique avec pression comprenant :
- un boîtier agencé pour recevoir une cuve de cuisson,
- une interface de sélection et/ou de paramétrage d'au moins une recette de cuisine, l'au moins une recette de cuisine étant associée d'une part à une nature et à une quantité du ou des ingrédients de l'au moins une recette de cuisine et d'autre part à des paramètres de fonctionnement de l'appareil de cuisson électrique,
- un outil de travail monté mobile en rotation dans la cuve de cuisson et configuré pour travailler un ou des ingrédients contenus dans la cuve de cuisson,
- un système d'entraînement comportant un moteur électrique configuré pour entraîner en rotation l'outil de travail, et
- une unité de commande configurée pour commander le fonctionnement de l'appareil de cuisson électrique en appliquant les paramètres de fonctionnement associés à l'au moins une recette de cuisine sélectionnée et/ou paramétrée à partir de l'interface de sélection,

l'unité de commande étant configurée pour surveiller, au cours de la réalisation d'au moins une étape de l'au moins une recette de cuisine sélectionnée et /ou paramétrée, une valeur déterminable représentative d'un paramètre de fonctionnement du moteur électrique au cours d'un cycle de fonctionnement du moteur électrique,
l'unité de commande étant configurée pour déterminer un état de transformation de la consistance du ou des ingrédients contenus dans la cuve de cuisson en fonction du dépassement d'un seuil prédéterminé de la valeur déterminable représentative du paramètre de fonctionnement du moteur électrique et pour au moins ajuster les paramètres de fonctionnement de l'appareil de cuisson électrique à la recette de cuisine sélectionnée et/ou paramétrée en fonction de ce dépassement de seuil prédéterminé de la valeur déterminable représentative du paramètre de fonctionnement du moteur électrique, caractérisé en ce que l'unité de commande est en outre configurée pour détecter la présence de l'outil de travail dans la cuve de cuisson lorsque la valeur déterminable représentative du paramètre de fonctionnement du moteur électrique atteint ou dépasse une valeur de seuil prédéterminée.

Ainsi, la présente invention permet de détecter la présence de l'outil de travail et d'ajuster automatiquement les paramètres de fonctionnement de l'appareil de cuisson électrique en tenant compte de l'évolution de l'état de transformation de la consistance du ou des ingrédients contenus dans la cuve de cuisson.

La consistance est l'état d'un corps du point de vue de la texture, de la malléabilité ou de la fluidité.

Le paramétrage d'une recette de cuisine consiste à laisser la possibilité à un utilisateur de pouvoir ajuster un rendu final de la recette de cuisine, par exemple définir une consistance désirée sur ce rendu final.

Il est entendu que dans la présente invention une recette de cuisine peut concerner la transformation d'un unique ingrédient.

On entend par seuil prédéterminé de la valeur déterminable représentative du paramètre de fonctionnement du moteur électrique une valeur dans l'absolu ou en relatif soit par rapport à une valeur instantanée de fonctionnement ou bien par rapport à une valeur moyenne de fonctionnement sur une durée prédéterminée.

Ainsi, ces dispositions permettent notamment de pouvoir par exemple ajuster automatiquement une recette de cuisine en cours de cuisson ou en cours de préparation (par exemple le temps de cuisson et/ou la température de cuisson ou la vitesse de rotation de l'outil de travail ou bien encore le moment de passage d'un mode de cuisson à un autre dans une même recette de cuisine : cuisson dorage puis pression) en fonction de la variation de la consistance des aliments contenus dans la cuve de cuisson, puisque cette variation de consistance a un impact direct sur le couple de rotation de l'outil de travail et donc sur le paramètre de fonctionnement du moteur électrique.

L'appareil de cuisson électrique peut en outre présenter une ou plusieurs des caractéristiques suivantes, prises seules ou en combinaison.

Selon un mode de réalisation de l'invention, l'au moins un paramètre de fonctionnement comporte au moins un paramètre parmi la vitesse de rotation du moteur électrique, le sens de rotation du moteur électrique, l'activation ou la mise en pause de rotation du moteur électrique, la température de chauffage, la durée de chauffage, l'humidité dans la cuve de cuisson, la pression dans la cuve de cuisson.

Selon un mode de réalisation de l'invention, l'appareil de cuisson électrique comporte un dispositif de chauffage qui est disposé dans le boîtier et qui est configuré pour chauffer la cuve de cuisson, par exemple au moins par conduction.

Selon un mode de réalisation de l'invention, le dispositif de chauffage comprend un élément résistif chauffant.

Selon un mode de réalisation de l'invention, le dispositif de chauffage est disposé en dessous de la paroi de fond de la cuve de cuisson.

Ces dispositions permettent de détecter aisément, et sans organe additionnel, la présence de l'outil de travail dans la cuve de cuisson. Dans le cas d'un cuiseur électrique sous pression, cela permet de savoir si l'outil est présent ou non sans devoir dépressuriser la cuve de cuisson.

Le couple moteur et le courant d'alimentation du moteur électrique, qui sont respectivement générés par ou qui alimente le moteur électrique, sont relativement faibles lorsqu'aucun outil de travail n'est présent dans la cuve de cuisson. En effet, lorsque le système d'entraînement en rotation est pourvu d'un arbre d'entraînement situé dans une partie centrale de la cuve de cuisson, les aliments contenus dans la cuve de cuisson ne s'opposent pas ou alors très peu à la rotation de l'arbre d'entraînement en l'absence de l'outil de travail, et lorsque le système d'entraînement en rotation est un système d'entraînement magnétique à base d'aimants, les aliments contenus dans la cuve de cuisson ne sont pas susceptibles d'entrer en contact avec le système d'entraînement magnétique. Cependant l'action mutuelle entre des aimants d'une pale et les aimants du système d'entrainement magnétique ainsi que le pincement de la cuve entre ces aimants contribuent à s'opposer à la rotation de l'arbre d'entraînement.

Au contraire, lorsque l'outil de travail est présent dans la cuve de cuisson, le couple moteur ou le courant d'alimentation devant respectivement être généré par ou consommé par le moteur électrique afin d'entraîner en rotation l'outil de travail est plus élevé, et varie en fonction de la consistance des aliments contenus dans la cuve de cuisson.

Le couple moteur du moteur électrique étant représentatif d'un paramètre de fonctionnement du moteur électrique, tel que le courant d'alimentation du moteur électrique, la surveillance d'un tel paramètre de fonctionnement par l'unité de commande permet de détecter aisément une variation du couple moteur du moteur électrique au cours d'un cycle de fonctionnement du moteur électrique, et ainsi de détecter notamment l'absence de l'outil de travail dans la cuve de cuisson lorsque le paramètre de fonctionnement est relativement faible et/ou une variation de la consistance des aliments contenus dans la cuve de cuisson.

Ainsi, l'appareil de cuisson électrique selon la présente invention permet de détecter automatiquement la présence ou non de l'outil de travail sans l'ajout d'un capteur spécifique, et peut être équipé d'un outil de travail magnétique ou non magnétique.

Selon un mode de réalisation de l'invention, l'unité de commande est configurée pour émettre un signal d'avertissement, par exemple sonore ou visuel, lorsque la présence de l'outil de travail dans la cuve de cuisson n'est pas détectée par l'unité de commande (ou lorsque l'absence de l'outil de travail dans la cuve de cuisson est détectée par l'unité de commande). L'unité de commande peut par exemple être configurée pour émettre le signal d'avertissement lorsque la présence de l'outil de travail dans la cuve de cuisson n'est pas détectée par l'unité de commande après l'écoulement d'une durée prédéterminée à compter d'une activation du moteur électrique.

Selon un mode de mise en œuvre de l'invention, l'unité de commande est configurée pour transmettre le signal d'avertissement à un ordiphone de l'utilisateur.

Selon un mode de mise en œuvre de l'invention, l'unité de commande est configurée pour commander un arrêt du moteur électrique, ou un arrêt du moteur électrique et un arrêt du dispositif de chauffage, lorsque la présence de l'outil de travail dans la cuve de cuisson n'est pas détectée par l'unité de commande.

Selon un mode de réalisation de l'invention, l'unité de commande est configurée pour détecter un avancement de cuisson optimal du ou des ingrédients contenus dans la cuve de cuisson lorsque la valeur déterminable représentative du paramètre de fonctionnement du moteur électrique atteint ou dépasse un seuil prédéterminé qui est représentatif d'une consistance optimale du ou des ingrédients pour la recette de cuisine sélectionnée et/ou paramétrée par l'utilisateur.

Le seuil prédéterminé peut par exemple être représentatif d'une variation significative mais non brutale de la valeur déterminable représentative du paramètre de fonctionnement du moteur électrique.

La détection de l'avancement de cuisson optimal permet de réaliser de manière optimale tout ou partie des étapes de la recette de cuisine, en prenant en considération que la consistance des ingrédients déjà présents dans la cuve de cuisson va encore évoluer au cours des étapes ultérieures de la recette de cuisine. Ainsi l'unité de commande parvient à déterminer qu'une consistance donnée est suffisante pour l'étape de la recette de cuisine en cours en tenant en compte que la consistance de ces ingrédients va encore évoluer au cours des étapes ultérieures de la recette de cuisine. En outre, l'unité de commande considèrera que l'utilisateur pourra passer à l'étape suivante une fois que la valeur déterminable représentative du paramètre de fonctionnement du moteur électrique atteint ou dépasse un seuil prédéterminé qui est représentatif de cette consistance donnée.

Selon un mode de mise en œuvre de l'invention, le seuil prédéterminé est variable et dépend de la recette sélectionnée et/ou paramétrée par l'utilisateur et donc de la nature du ou des ingrédients contenus dans la cuve de cuisson, de leur quantité, de leur forme ou encore de leur état.

Selon un mode de réalisation de l'invention, l'unité de commande est configurée pour commander un arrêt du moteur électrique, ou un arrêt du moteur électrique et un arrêt du dispositif de chauffage, ou réduire la vitesse du moteur électrique, ou bien pour inverser le sens de rotation du moteur électrique, lorsque la valeur déterminable représentative du paramètre de fonctionnement du moteur électrique atteint ou dépasse une valeur seuil de prévention de blocage de moteur, qui est avantageusement supérieure à la valeur de seuil prédéterminée.

La réduction de la vitesse est particulièrement adaptée dans le cas du remuage d'un fluide non-newtonien rhéoépaississant.

Selon un mode de réalisation de l'invention, l'unité de commande est configurée pour inverser un sens de rotation du moteur électrique pendant une durée d'inversion prédéterminée à partir d'un instant où la valeur déterminable représentative du paramètre de fonctionnement du moteur électrique a atteint ou dépassé une valeur seuil de prévention de blocage de moteur.

Selon un mode de mise en œuvre de l'invention, l'unité de commande est en outre configurée pour commander un arrêt du moteur électrique, ou un arrêt du moteur électrique et un arrêt du dispositif de chauffage, après l'écoulement de la durée d'inversion prédéterminée.

Selon un mode de mise en œuvre de l'invention, l'unité de commande est en outre configurée pour inverser de nouveau le sens de rotation du moteur électrique après l'écoulement de la durée d'inversion prédéterminée.

Selon un mode de réalisation de l'invention, la valeur déterminable représentative du paramètre de fonctionnement du moteur électrique est choisie parmi le courant d'alimentation du moteur électrique (c'est-à-dire le courant traversant le moteur électrique), la moyenne glissante du courant d'alimentation du moteur électrique, la variation dans le temps du courant d'alimentation du moteur électrique, le couple moteur, ou une variation dans le temps du couple moteur.

Selon un mode de réalisation de l'invention, l'unité de commande est configurée pour déterminer le paramètre de fonctionnement du moteur électrique.

Selon un mode de réalisation de l'invention, le système d'entraînement comprend une couronne périphérique s'étendant autour d'une paroi latérale de la cuve de cuisson, au moins un premier dispositif magnétique permanent fixé à la couronne périphérique, et au moins un deuxième dispositif magnétique permanent fixé à l'outil de travail et configuré pour coopérer avec l'au moins un premier dispositif magnétique permanent, le moteur électrique étant configuré pour entraîner en rotation la couronne périphérique autour de la paroi latérale de la cuve de cuisson.

De façon avantageuse, le système d'entraînement est configuré pour entraîner en rotation l'outil de travail lorsque l'au moins un deuxième dispositif magnétique permanent est placé en regard de l'au moins un premier dispositif magnétique permanent et lorsque le moteur électrique entraîne en rotation la couronne périphérique.

Selon un mode de réalisation de l'invention, la couronne périphérique comporte une pluralité de dents réparties sur une surface périphérique de la couronne périphérique.

Selon un mode de réalisation de l'invention, le système d'entraînement comporte un pignon qui est couplé en rotation à un arbre de sortie du moteur électrique, les dents de la couronne périphérique étant configurées pour s'engrener avec des dentures prévues sur le pignon.

Selon un mode de réalisation de l'invention, le moteur électrique est disposé en périphérie de la paroi latérale de la cuve de cuisson. Ces dispositions permettent, lorsque l'appareil de cuisson électrique est équipé d'un dispositif de chauffage, d'éloigner le moteur électrique du dispositif de chauffage.

Selon un mode de réalisation de l'invention, le moteur électrique est disposé sous le fond de la cuve de cuisson.

Selon un mode de réalisation de l'invention, l'outil de travail est amovible.

Selon un mode de réalisation de l'invention, l'outil de travail est monobloc.

Selon un mode de réalisation de l'invention, l'outil de travail est un outil de coupe ou un outil de brassage.

Selon un mode de réalisation de l'invention, l'outil de brassage est une pale de brassage comportant au moins un bras de brassage qui est configuré pour brasser des aliments contenus dans la cuve de cuisson, l'au moins un bras de brassage comportant une portion d'extrémité configurée pour s'étendre à proximité ou au contact de la paroi latérale de la cuve de cuisson. De façon avantageuse, la pale de brassage comporte une, ou bien deux ou trois bras de brassage, qui sont configurés pour brasser des aliments contenus dans la cuve de cuisson.

Selon un mode de réalisation de l'invention, l'au moins un deuxième dispositif magnétique permanent est fixé à la portion d'extrémité de l'au moins un bras de brassage.

Selon un mode de réalisation de l'invention, l'au moins un premier dispositif magnétique permanent comporte un ou plusieurs premiers aimants permanents, le cas échéant répartis sur la couronne périphérique de manière décalée angulairement les uns par rapport aux autres.

Selon un mode de réalisation de l'invention, l'au moins un deuxième dispositif magnétique permanent comporte un ou plusieurs deuxièmes aimants permanents.

Selon un mode de réalisation de l'invention, l'au moins un premier dispositif magnétique permanent et l'au moins un deuxième dispositif magnétique permanent sont agencés de telle sorte que l'au moins un premier dispositif magnétique permanent et l'au moins un deuxième dispositif magnétique permanent exercent l'un sur l'autre une force d'attraction magnétique lorsqu'ils sont placés en regard l'un de l'autre.

Selon un mode de réalisation de l'invention, l'unité de commande comporte un contrôleur, tel qu'un microcontrôleur, ou un processeur, tel qu'un microprocesseur, configuré pour commander le fonctionnement de l'appareil de cuisson électrique.

Selon un mode de réalisation de l'invention, l'unité de commande comprend une mémoire, de type non-volatile, qui stocke des lignes d'instructions sous forme de programme à exécuter par le contrôleur ou le processeur.

Selon un mode de réalisation de l'invention, la cuve de cuisson comporte une paroi de fond à partir de laquelle s'étend la paroi latérale de la cuve de cuisson, et une ouverture d'accès à travers laquelle des aliments peuvent être introduits dans la cuve de cuisson.

Selon un mode de réalisation de l'invention, la paroi de fond de la cuve de cuisson est globalement lisse.

Selon un mode de réalisation de l'invention, le moteur électrique présente un axe de rotation qui est positionné sensiblement parallèlement à un axe central de rotation de la couronne périphérique.

Selon un mode de réalisation de l'invention, le moteur électrique présente un axe de rotation qui est positionné sensiblement transversalement à un axe central de rotation de la couronne périphérique.

Selon un mode de réalisation de l'invention, l'appareil de cuisson électrique comporte un élément de couvercle déplaçable entre une position ouverte dans laquelle l'élément de couvercle autorise un accès à la cuve de cuisson et une position fermée dans laquelle l'élément de couvercle empêche l'accès à la cuve de cuisson. L'élément de couvercle peut par exemple être monté pivotant sur le boîtier.

Selon un mode de réalisation de l'invention, la cuve de cuisson comporte un pion de centrage qui s'étend à partir de la paroi de fond de la cuve de cuisson et qui est configuré pour coopérer avec l'outil de travail de manière à centrer l'outil de travail dans la cuve de cuisson, et/ou l'appareil de cuisson électrique comporte un aimant central mobile disposé sous une zone centrale de la cuve de cuisson et agencé pour attirer une partie centrale de l'outil de travail comprenant une portion ferromagnétique.

Selon un mode de réalisation de l'invention, l'unité de commande est configurée pour détecter un désaccouplement de l'au moins un premier dispositif magnétique permanent fixé à la couronne périphérique, et de l'au moins un deuxième dispositif magnétique permanent fixé à l'outil de travail.

Cette disposition permet d'informer l'unité de commande que le brassage des aliments a été interrompu.

Selon un mode de réalisation de l'invention, l'unité de commande, après avoir détecté un désaccouplement, est configurée pour détecter un ré-accouplement de l'au moins un premier dispositif magnétique permanent fixé à la couronne périphérique, et de l'au moins un deuxième dispositif magnétique permanent fixé à l'outil de travail.

Cette disposition permet d'informer l'unité de commande que le brassage des aliments a repris.

Selon un mode de réalisation de l'invention, le moteur électrique et l'outil de travail sont reliés par un axe d'entrainement mécanique traversant la cuve de cuisson.

Selon un mode de réalisation de l'invention, l'au moins une recette de cuisine est stockée dans une mémoire de l'appareil de cuisson électrique ou bien sur un serveur distant, l'appareil de cuisson électrique comprenant des moyens de communication pour communiquer avec le serveur distant.

Selon un mode de réalisation de l'invention, l'unité de commande est configurée pour déterminer une quantité d'un aliment déterminé disposé dans la cuve de cuisson à partir de la valeur déterminable représentative d'un paramètre de fonctionnement du moteur électrique au cours d'un cycle de fonctionnement du moteur électrique.

Cette disposition permet d'estimer une quantité d'un aliment d'un type déterminé par l'utilisateur, et d'ajuster les paramètres de cuisson à la quantité réelle de l'aliment introduit dans la cuve de cuisson.

Cette fonction est particulièrement intéressante pour la cuisson du riz.

Selon un mode de réalisation de l'invention, l'appareil de cuisson électrique est un appareil de cuisson électrique sous pression, tel qu'un autocuiseur électrique ou un multicuiseur électrique avec pression,.

### Brève description des figures

L'invention sera bien comprise à l'aide de la description qui suit en référence aux dessins schématiques annexés représentant, à titre d'exemple non limitatif, une forme d'exécution de cet appareil de cuisson électrique.
[Fig 1] La figure 1 est une vue en coupe longitudinale d'un appareil de cuisson électrique selon la présente invention.
[Fig 2] La figure 2 est une vue partielle de dessus de l'appareil de cuisson électrique de la figure 1.
[Fig 3] La figure 3 est une vue schématique d'un agencement d'un premier dispositif magnétique permanent et d'un deuxième dispositif magnétique permanent d'un système d'entraînement de l'appareil de cuisson électrique de la figure 1.
[Fig 4] La figure 4 est une vue de profil de l'extrémité d'une pale de brassage et d'une partie de la paroi latérale d'une cuve de cuisson de l'appareil de cuisson électrique de la figure 1.
[Fig 5] La figure 5 est une vue schématique d'un circuit d'alimentation du moteur électrique auquel est relié une unité de commande de l'appareil de cuisson électrique de la figure 1.
[Fig 6] La figure 6 est un diagramme représentant la variation en fonction du temps du courant d'alimentation d'un moteur électrique du système d'entraînement de l'appareil de cuisson électrique de la figure 1.
[Fig 7] La figure 7 est un diagramme représentant l'évolution dans le temps du courant d'alimentation du moteur électrique lors d'une cuisson d'oignons émincés.
[Fig 8] La figure 8 est un diagramme représentant l'évolution dans le temps du courant d'alimentation du moteur électrique lorsque survient un décrochage d'un outil de travail magnétique.
[Fig 9] La figure 9 est un diagramme représentant l'évolution dans le temps du courant d'alimentation du moteur électrique lorsque survient un décrochage puis un raccrochage d'un outil de travail magnétique.
[Fig 10] La figure 10 est un diagramme représentant l'évolution dans le temps du courant d'alimentation du moteur électrique lorsque survient un blocage d'un outil de travail lié mécaniquement au moteur électrique.

### Description détaillée

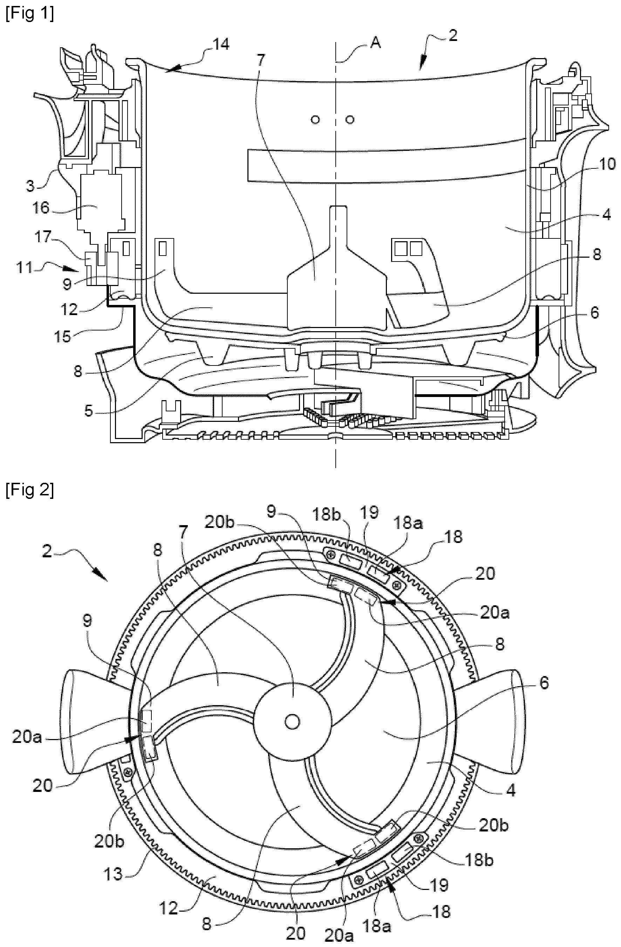

Les figures 1 et 2 représentent un appareil de cuisson électrique 2, et plus particulièrement un appareil de cuisson électrique sous pression, tel qu'un autocuiseur électrique ou un multicuiseur électrique avec pression.

L'appareil de cuisson électrique 2 comprend un boîtier 3 apte à recevoir une cuve de cuisson 4 amovible, elle-même configurée pour recevoir des aliments à cuire, et un couvercle (non visible sur les figures) déplaçable entre une position ouverte dans laquelle le couvercle autorise un accès à la cuve de cuisson 4 et une position fermée dans laquelle le couvercle empêche l'accès à la cuve de cuisson 4. Le couvercle peut être amovible ou non. Selon le mode de réalisation représenté sur les figures, la cuve de cuisson 4 présente une section transversale sensiblement circulaire.

L'appareil de cuisson électrique 2 comprend en outre un dispositif de chauffage 5 qui est disposé dans le boîtier 3 et qui est configuré pour chauffer la cuve de cuisson 4 par conduction. Néanmoins, d'autres types de chauffage pourraient être envisagés, notamment par induction, par rayonnement ou à air chaud. Le dispositif de chauffage 5 peut par exemple comporter un élément résistif chauffant et est avantageusement disposé en dessous d'une paroi de fond 6 de la cuve de cuisson 4.

En outre, l'appareil de cuisson électrique comporte une interface (non illustrée) de sélection et/ou de paramétrage d'au moins une recette stockée dans une mémoire de l'appareil de cuisson électrique 2 ou bien sur un serveur distant, l'appareil de cuisson électrique comprenant des moyens de communication (non illustrés) pour communiquer avec le serveur distant. L'au moins une recette est associée d'une part à au moins une nature et une quantité du ou des ingrédients de l'au moins une recette et d'autre part à des paramètres de fonctionnement de l'appareil de cuisson électrique 2.

L'utilisateur a également la possibilité de paramétrer plus précisément la recette en précisant davantage les paramètres de la recette.

Ainsi, la nature, la quantité et éventuellement la forme des ingrédients peuvent être précisés de manière déclarative par l'utilisateur via l'interface de sélection et ou de paramétrage. Ces paramètres pourraient également être mesurées directement ou indirectement par des capteurs dédiés ou d'autres dispositifs disposés sur ou associés à l'appareil de cuisson électrique 2.

L'utilisateur a également la possibilité de paramétrer un résultat souhaité, notamment s'il désire une consistance rendant les aliments davantage fondants ou bien craquants.

L'appareil de cuisson électrique 2 comprend également un outil de travail 7, tel qu'une pale de brassage ou un outil de coupe, qui est amovible et qui est monté mobile en rotation dans la cuve de cuisson 4. De façon avantageuse, l'outil de travail 7 est monobloc et comporte une pluralité de bras de travail 8, et par exemple trois bras de travail 8, qui sont configurés pour travailler des aliments contenus dans la cuve de cuisson 4. Selon le mode de réalisation représenté sur les figures, l'outil de travail 7 est une pale de brassage et comporte une pluralité de bras de brassage qui sont configurés pour brasser des aliments contenus dans la cuve de cuisson 4.

Les bras de travail 8 sont décalés angulairement les uns par rapport aux autres. De façon avantageuse, les bras de travail 8 sont régulièrement répartis autour d'un axe de rotation A de l'outil de travail 7.

Chaque bras de travail 8 comporte plus particulièrement une portion d'extrémité 9 qui est configurée pour s'étendre à proximité ou au contact d'une surface interne d'une paroi latérale 10 de la cuve de cuisson 4.

En outre, l'outil de travail 7 peut comprendre des moyens de préhension (non illustrés) disposés à l'extrémité supérieure d'un moyeu à partir duquel s'étendent les bras de travail 8 pour permettre à l'utilisateur de retirer ou de placer l'outil de travail 7.

L'appareil de cuisson électrique 2 comprend de plus un système d'entraînement 11 qui est configuré pour entraîner en rotation l'outil de travail 7.

Dans le cas d'un système d'entrainement mécanique, ces moyens de préhension peuvent également permettre à l'utilisateur de conférer à l'outil de travail un mouvement de rotation en le faisant tourner avec sa main.

Selon le mode de réalisation représenté sur les figures 1 à 4, le système d'entraînement 11 est un système d'entraînement magnétique et comprend une couronne périphérique 12 qui s'étend autour de la paroi latérale 10 de la cuve de cuisson 4 et qui est décalée verticalement par rapport au dispositif de chauffage 5. De façon avantageuse, l'axe central de rotation de la couronne périphérique 12 est sensiblement confondu avec l'axe de rotation de l'outil de travail 7, et est sensiblement vertical lorsque l'appareil de cuisson électrique 2 repose sur un support horizontal.

La couronne périphérique 12 comporte une pluralité de dents 13 réparties sur une surface périphérique externe de la couronne périphérique 12. De façon avantageuse, la couronne périphérique 12 est plus proche de la paroi de fond 6 de la cuve de cuisson 4 que d'une ouverture d'accès 14 de la cuve de cuisson 4 à travers laquelle des aliments peuvent être introduits dans la cuve de cuisson 4. Néanmoins, toute autre configuration reste possible, notamment avec la couronne périphérique 12 plus proche de l'ouverture d'accès 14 de la cuve de cuisson 4 que de la paroi de fond 6 de la cuve de cuisson 4 dans le cas où le couvercle comporte des moyens de chauffage.

L'appareil de cuisson électrique 2 comporte en outre une partie de support 15 qui est configurée pour supporter de manière coulissante la couronne périphérique 12. De façon avantageuse, la partie de support 15 comporte une pluralité de billes sur lesquelles repose la couronne périphérique 12. Il est également possible de prévoir des roulements à billes, des roulements à rouleaux ou bien encore des paliers. Il est également envisageable de simplement mettre en contact la partie de support 15 et la couronne périphérique 12 et de les faire glisser l'une sur l'autre en favorisant l'utilisation de deux matériaux à coefficient de frottement réduit.

Le système d'entraînement 11 comprend également un moteur électrique 16 configuré pour entraîner en rotation la couronne périphérique 12 autour de la paroi latérale 10 de la cuve de cuisson 4. Le moteur électrique 16 est avantageusement disposé en périphérie de la paroi latérale 10 de la cuve de cuisson 4, et présente un axe de rotation qui est sensiblement parallèle à l'axe central de rotation de la couronne périphérique 12. Il peut également être envisagé de disposer ce moteur électrique 16 en dessous de la cuve de cuisson 4 selon l'encombrement que l'on entend conférer à l'appareil de cuisson électrique 2.

Selon le mode de réalisation représenté sur les figures, le système d'entraînement 11 comporte un pignon 17 qui est couplé en rotation à un arbre de sortie du moteur électrique 16 et qui comporte des dentures configurées pour s'engrener avec les dents 13 de la couronne périphérique 12.

Le système d'entraînement 11 comprend en outre une pluralité de premiers dispositifs magnétiques permanents 18 qui sont fixés à la couronne périphérique 12 et qui sont décalés angulairement les uns par rapport aux autres. Chacun des premiers dispositifs magnétiques permanents 18 peut par exemple être disposé à proximité de la paroi de fond 6 de la cuve de cuisson 4, ou être décalé verticalement par rapport à la paroi de fond 6 de la cuve de cuisson 4.

Selon un mode de réalisation de l'invention, la couronne périphérique 12 comporte plusieurs logements internes 19 qui sont décalés angulairement les uns des autres et dans chacun desquels est disposé un premier dispositif magnétique permanent 18. Chaque logement interne 19 peut par exemple déboucher dans la surface supérieure de la couronne périphérique 12 et être configuré pour permettre une insertion d'un premier dispositif magnétique permanent 18 dans ledit logement interne 19 après fabrication de la couronne périphérique 12. Chaque premier dispositif magnétique permanent 18 peut également avoir été surmoulé dans la couronne périphérique 12 lors de son moulage par injection.

Le système d'entraînement 11 comprend de plus une pluralité de deuxièmes dispositifs magnétiques permanents 20 qui sont configurés pour être disposés dans la cuve de cuisson 4.

Chacun des deuxièmes dispositifs magnétiques permanents 20 est fixé à la portion d'extrémité 9 d'un bras de travail 8 respectif. A cet effet, la portion d'extrémité 9 de chaque bras de travail 8 comporte un logement de réception dans lequel est logé un deuxième dispositif magnétique permanent 20. De façon avantageuse, le deuxième dispositif magnétique permanent 20 associé à chaque bras de travail 8 pourrait être disposé dans un insert monté amovible dans le logement de réception respectif. Selon un mode de réalisation de l'invention, chaque logement de réception est hermétique. Chaque deuxième dispositif magnétique permanent 20 peut également avoir été surmoulé dans le bras de travail 8 respectif lors de son moulage par injection.

Selon le mode de réalisation représenté sur les figures, le nombre de deuxièmes dispositifs magnétiques permanents 20 est identique au nombre de bras de travail 8, et le nombre de deuxièmes dispositifs magnétiques permanents 20 est identique au nombre de premiers dispositifs magnétiques permanents 18.

Les premiers dispositifs magnétiques permanents 18 et les deuxièmes dispositifs magnétiques permanents 20 sont agencés de telle sorte que chaque premier dispositif magnétique permanent 18 est configuré pour exercer une force d'attraction magnétique sur un deuxième dispositif magnétique permanent 20 placé en regard dudit premier dispositif magnétique permanent 18. Ainsi, le système d'entraînement 11 est configuré pour entraîner en rotation l'outil de travail 7 lorsque chaque deuxième dispositif magnétique permanent 20 est placé en regard d'un premier dispositif magnétique permanent 18 respectif et lorsque le moteur électrique 16 entraîne en rotation la couronne périphérique 12.

Selon un mode de réalisation de l'invention, les premiers et deuxièmes dispositifs magnétiques permanents 18, 20 sont agencés de telle sorte que la force d'attraction magnétique mutuelle exercée entre chaque premier dispositif magnétique permanent 18 et chaque deuxième dispositif magnétique permanent 20 placés en regard comprend une composante sensiblement radiale par rapport à l'axe de rotation A de l'outil de travail 7.

Par ailleurs, les premiers et deuxièmes dispositifs magnétiques permanents 18, 20 sont agencés de telle sorte que la force d'attraction magnétique mutuelle exercée entre chaque premier dispositif magnétique permanent 18 et chaque deuxième dispositif magnétique permanent 20 placé en regard dudit premier dispositif magnétique permanent 18 comprend une composante permettant de plaquer le bras de travail 8 respectif contre la paroi de fond 6 de la cuve de cuisson 4.

De façon avantageuse, les premiers dispositifs magnétiques permanents 18 sont configurés pour coopérer avec les deuxièmes dispositifs magnétiques permanents 20 de manière à centrer l'outil de travail 7 dans la cuve de cuisson 4, et de manière à positionner automatiquement chacun des deuxièmes dispositifs magnétiques permanents 20 en regard d'un premier dispositif magnétique permanent 18 lorsque l'outil de travail 7 est disposé dans la cuve de cuisson 4.

Selon le mode de réalisation représenté sur les figures, chaque premier dispositif magnétique permanent 18 comporte deux premiers aimants permanents 18a, 18b dont l'axe d'aimantation est orienté sensiblement radialement par rapport à l'axe de rotation A de la couronne périphérique 12 et qui sont agencés en opposition de pôle.

Chaque deuxième dispositif magnétique permanent 20 comporte deux deuxièmes aimants permanents 20a, 20b dont l'axe d'aimantation est orienté radialement par rapport à l'axe de rotation A de l'outil de travail 7 et qui sont agencés en opposition de pôle. Les premiers et deuxièmes aimants permanents 18a, 18b, 20a, 20b des premiers et deuxièmes dispositifs magnétiques permanents 18, 20 peuvent être réalisés par exemple en néodyme, en ferrite, en AINico ou en SmCo.

Les deux premiers aimants permanents 18a, 18b de chaque premier dispositif magnétique permanent 18 sont agencés pour être disposés respectivement en regard et en opposition de pôle d'un des deux deuxièmes aimants permanents 20a, 20b d'un deuxième dispositif magnétique permanent 20.

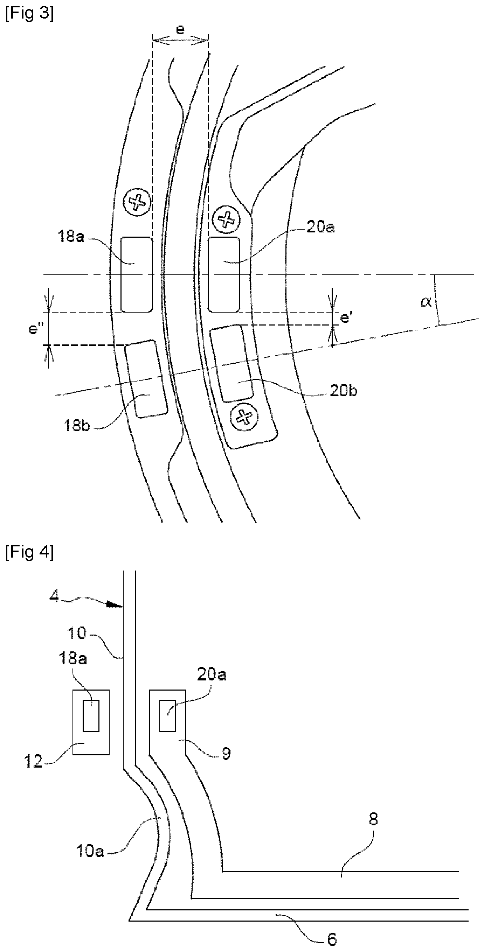

Comme illustré sur la figure 3, la distance de l'entrefer e' entre les deux deuxièmes aimants permanents 20a, 20b de chaque deuxième dispositif magnétique permanent 20 est supérieur ou égal à la moitié de l'entrefer e entre un deuxième aimant permanent 20a, 20b d'un deuxième dispositif magnétique permanent 20 et un premier aimant permanent 18a, 18b d'un premier dispositif magnétique permanent 18 placé en regard dudit deuxième dispositif magnétique permanent 20. Ainsi, on minimise les flux de fuite entre les deux deuxièmes aimants permanents 20a, 20b. Toutefois, en cas d'inégalité, la distance de l'entrefer e' ne doit pas être trop grande au-delà de la moitié de l'entrefer e entre un deuxième aimant permanent 20a, 20b du deuxième dispositif magnétique permanent 20 et un premier aimant permanent 18a, 18b du premier dispositif magnétique permanent 18, car sinon le flux risquerait de se reboucler davantage sur un même deuxième aimant permanent 20a, 20b. Le meilleur compromis consiste à avoir une égalité entre la distance de l'entrefer e' entre les deux deuxièmes aimants permanents 20a, 20b d'un deuxième dispositif magnétique permanent 20 et la moitié de l'entrefer e entre un deuxième aimant permanent 20a, 20b dudit deuxième dispositif magnétique permanent 20 et un premier aimant permanent 18a, 18b d'un premier dispositif magnétique permanent 18 placé en regard dudit deuxième dispositif magnétique permanent 20.

Afin de maximiser encore davantage le flux magnétique utile entre un premier dispositif magnétique permanent 18 et un deuxième dispositif magnétique permanent 20, un empilement de tôle ou tout autre conducteur magnétique peut être adossé à une face de chaque aimant d'un dispositif magnétique permanent 18, 20 opposée à un aimant de l'autre dispositif magnétique permanent 18, 20. De tels conducteurs magnétiques permettent d'économiser davantage de volume d'aimants à volume de logement interne 19 ou logement de réception constant et donc d'économiser du coût, tout en conservant des performances similaires.

L'entrefer e" entre les deux premiers aimants permanents 18a, 18b de chaque premier dispositif magnétique permanent 18 résulte quant à lui de la conservation du même écart angulaire que l'écart angulaire α entre les deux deuxièmes aimants permanents 20a, 20b d'un deuxième dispositif magnétique permanent 20 placé en regard dudit premier dispositif magnétique permanent 18, ces écarts angulaires étant mesurés entre deux droites sécantes au niveau de l'axe de rotation A de l'outil de travail 7 et traversant le centre des premiers et deuxièmes aimants permanents 18a, 18b, 20a, 20b respectivement du premier dispositif magnétique permanent 18 et du deuxième dispositif magnétique permanent 20.

Ces dispositions permettent d'orienter les flux magnétiques des deux deuxièmes aimants permanents 20a, 20b du deuxième dispositif magnétique permanent 20 en direction des premiers aimants permanents 18a, 18b du premier dispositif magnétique permanent 18 et réciproquement en défavorisant le rebouclage des flux magnétiques sur un même aimant permanent.

Une telle configuration de chaque premier dispositif magnétique permanent 18 et de chaque deuxième dispositif magnétique permanent 20 permet d'augmenter la force d'attraction entre un premier dispositif magnétique permanent 18 et un deuxième dispositif magnétique permanente placé en regard dudit premier dispositif magnétique permanent 18 et donc d'augmenter le couple transmis à l'outil de travail 7. En effet, lorsque les deux deuxièmes aimants permanents 20a, 20b d'un deuxième dispositif magnétique permanent 20 sont situés en regard d'un premier dispositif magnétique permanent 18, et notamment centrés axialement par rapport aux deux premiers aimants permanents 18a, 18b dudit premier dispositif magnétique permanent 18, alors les deux premiers aimants permanents 18a, 18b et les deux deuxièmes aimants permanents 20a, 20b complémentaires forment un circuit magnétique de moindre énergie pour le rebouclage du flux magnétique.

Selon une variante de réalisation de l'invention non représentée sur les figures, chaque premier dispositif magnétique permanent 18 et chaque deuxième dispositif magnétique permanent 20 pourraient comporter respectivement un unique premier aimant permanent et un unique deuxième aimant permanent.

Les premiers et deuxièmes aimants permanents 18a, 18b, 20a, 20b des premiers et deuxièmes dispositifs magnétiques permanents 18, 20 peuvent être réalisés par exemple en néodyme, en ferrite, en AINico ou en SmCo.

Selon un autre mode de réalisation de l'invention non représenté sur les figures, au moins deux bras de travail 8 parmi la pluralité de bras de travail 8 ont des formes différentes. Cette disposition permet d'optimiser la forme d'un bras de travail 8 par exemple pour le brassage d'aliments de petite dimension et d'optimiser la forme d'un autre bras de travail 8 par exemple pour le brassage d'aliments de plus grande dimension.

Par ailleurs, comme illustré sur la figure 4, la paroi latérale 10 de la cuve de cuisson 4 comprend un bossage intérieur 10a et la portion d'extrémité 9 de chaque bras de travail 8 est agencée pour enjamber le bossage intérieur 10a. Ce bossage intérieur 10a permet à chaque bras de travail 8 de réaliser correctement sa fonction de brassage lorsque l'outil de travail 7 est une pale de brassage.

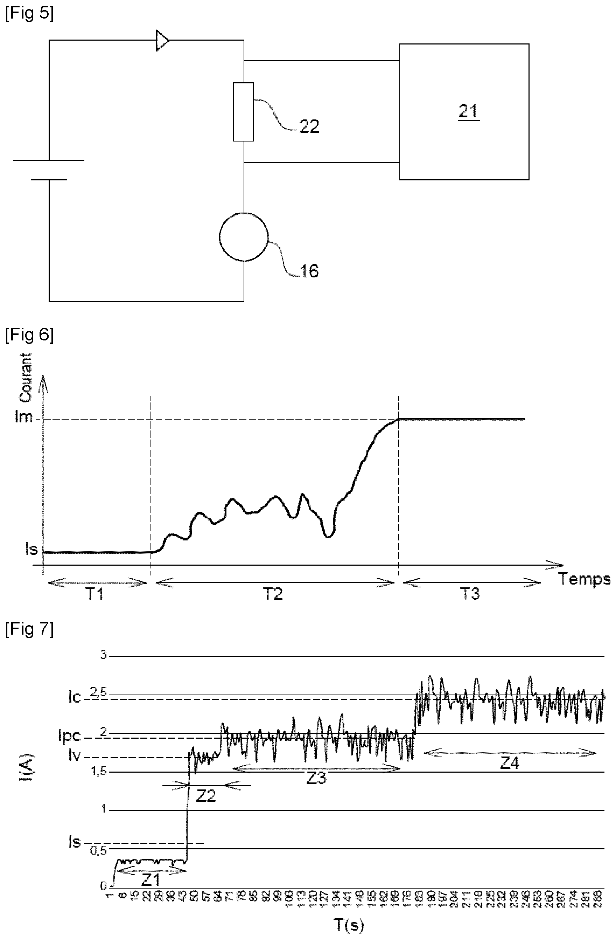

Comme illustré à la figure 5, l'appareil de cuisson électrique 2 comprend en outre une unité de commande 21, comportant par exemple un contrôleur, tel qu'un microcontrôleur, ou un processeur, tel qu'un microprocesseur, configurée pour commander le fonctionnement de l'appareil de cuisson électrique 2 en appliquant les paramètres de fonctionnement associés à l'au moins une recette sélectionnée et/ou paramétrée à partir de l'interface de sélection.

Notamment, le fonctionnement est commandé par un asservissement du dispositif de chauffage 5 et du moteur électrique 16. L'unité de commande 21 comprend avantageusement une mémoire, de type non-volatile, qui stocke des lignes d'instructions sous forme de programme à exécuter par le contrôleur ou le processeur.

Ces lignes d'instructions pourraient également être stockées sur un serveur distant dans le cas où l'appareil de cuisson électrique 2 comprendrait des moyens de communication (non illustrés) pour communiquer avec le serveur distant.

L'unité de commande 21 est avantageusement configurée pour surveiller au cours de la réalisation d'au moins une étape de l'au moins une recette sélectionnée et/ou paramétrée, une valeur déterminable représentative d'un paramètre de fonctionnement du moteur électrique 16 comme par exemple le courant d'alimentation du moteur électrique 16 au cours d'un cycle de fonctionnement du moteur électrique 16, et pour déterminer un état de transformation de la consistance du ou des ingrédients contenus dans la cuve de cuisson 4 en fonction du dépassement d'un seuil prédéterminé de la valeur déterminable représentative du paramètre de fonctionnement du moteur électrique 16 notamment du courant d'alimentation du moteur électrique 16.

La valeur déterminable représentative du paramètre de fonctionnement du moteur électrique 16 peut par exemple être le courant d'alimentation du moteur électrique 16 lui-même, la moyenne glissante du courant d'alimentation du moteur électrique 16, une variation dans le temps de ce courant d'alimentation du moteur électrique 16, un couple moteur ou bien une variation de ce couple moteur.

Le courant d'alimentation du moteur électrique 16 peut par exemple être déterminé par calcul en mesurant la tension aux bornes d'une résistance calibrée 22 (voir la figure 5), telle qu'une résistance de shunt montée en série avec le moteur électrique 16. D'autres valeurs déterminables représentatives du paramètre de fonctionnement du moteur électrique 16 peuvent ensuite être déduite à partir de ce calcul du courant électrique.

Dans un mode de réalisation préférentiel, l'unité de commande 21 est plus particulièrement configurée pour déterminer la moyenne glissante du courant d'alimentation du moteur électrique 16, c'est-à-dire le courant consommé par le moteur électrique 16, au cours d'une plage temporelle prédéterminée de fonctionnement du moteur électrique 16.

En outre, dans notre exemple, si la valeur moyenne glissante du courant d'alimentation du moteur électrique 16 dépasse le seuil prédéterminé de moyenne glissante du courant d'alimentation du moteur électrique 16 alors l'unité de commande 21 va ajuster les paramètres de fonctionnement de l'appareil de cuisson électrique 2 en fonction de ce dépassement de seuil prédéterminé.

Cet ajustement peut par exemple concerner au moins un paramètre de fonctionnement de l'appareil de cuisson électrique 2, par exemple la température de cuisson et/ou la durée de chauffage, mais aussi la vitesse de rotation du moteur électrique 16, le sens de rotation du moteur électrique 16, l'activation ou la mise en pause de rotation du moteur électrique 16 ou encore la pression dans la cuve de cuisson ou l'humidité dans la cuve de cuisson. Ainsi, dans l'exemple présenté, l'unité de commande 21 est configurée pour modifier au moins un paramètre de chauffage du dispositif de chauffage 5, par exemple la température de chauffage du dispositif de chauffage 5 et/ou le temps d'activation du dispositif de chauffage 5, de manière à modifier l'au moins un paramètre de cuisson de l'appareil de cuisson électrique 2 en fonction de la variation du courant d'alimentation du moteur électrique 16.

De façon avantageuse, l'unité de commande 21 est configurée pour détecter un avancement de cuisson optimal du ou des ingrédients contenus dans la cuve de cuisson 4 lorsque la moyenne glissante du courant d'alimentation du moteur électrique 16 atteint ou dépasse un seuil prédéterminé qui est représentatif d'une consistance optimale du ou des ingrédients pour la recette sélectionnée et/ou paramétrée par l'utilisateur.

De façon avantageuse, le seuil prédéterminé est variable et dépend des propriétés physiques des ingrédients contenus dans la cuve de cuisson 4, et l'unité de commande 21 est configurée pour modifier le seuil prédéterminé en fonction de ces propriétés physiques et du souhait de cuisson de l'utilisateur. La mémoire de l'unité de commande 21 peut par exemple comporter une base de données comportant des abaques pour définir différentes valeurs du seuil prédéterminé qui correspondent chacune à des propriétés physiques d'ingrédients correspondant.

Ces abaques peuvent également contenir différentes valeurs de seuils prédéterminées qui correspondent à des combinaisons de quantités déterminés d'ingrédients déterminés. Ainsi, la consistance optimale peut s'appliquer à l'étape de la recette sélectionnée et/ou paramétrée et qui comprend plusieurs ingrédients.

La consistance de ces ingrédients ou combinaison d'ingrédients selon leur état de cuisson peut également être pris en compte, notamment pour les étapes ultérieures de la recette qui nécessiterait l'ajout d'ingrédients à des ingrédients qui avaient déjà commencé à cuire et qui présenterait donc une consistance qui a déjà évolué par rapport à leur consistance d'origine.

Ainsi, la consistance optimale des ingrédients ne reflète pas uniquement la consistance optimale en vue de la consommation de ces ingrédients mais reflète davantage la consistance des ingrédients pour une étape considérée de la recette en tenant compte que cette consistance peut encore évoluée au cours de la réalisation des étapes ultérieures de la recette.

La figure 6 représente un exemple de l'évolution du courant d'alimentation du moteur électrique 16 en fonction du temps, et plus particulièrement au cours d'une recette comprenant une première période T1 au cours de laquelle est réalisée une première étape de recette durant laquelle l'outil de travail 7 n'est pas situé dans la cuve de cuisson 4. On constate qu'au cours de cette première période T1, le courant moteur présente une valeur de seuil prédéterminée Is relativement stable. Lorsque le moteur électrique 16 est activé par l'unité de commande 21 en l'absence de l'outil de travail 7 dans la cuve de cuisson 4, le couple moteur du moteur électrique 16 est très faible et donc le courant d'alimentation du moteur électrique 16 est également très faible et est en particulier inférieur ou égal à la valeur de seuil prédéterminée Is. Le fait que l'outil de travail 7 ne soit pas présent dans la cuve de cuisson 4 correspond à un point de fonctionnement moteur présentant une charge minimale.

Après la première période T1 débute une deuxième période T2 au cours de laquelle est réalisée une deuxième étape de recette et durant laquelle un ou des ingrédients ainsi que l'outil de travail 7 sont introduits dans la cuve de cuisson 4.

Au cours de cette deuxième période T2, le courant d'alimentation varie en fonction des interactions de l'outil de travail 7 avec le ou les ingrédients et de l'évolution de la consistance du ou des ingrédients contenus dans la cuve de cuisson 4.

Lorsque le moteur électrique 16 est activé par l'unité de commande 21 en présence de l'outil de travail 7 dans la cuve de cuisson 4, le couple à fournir par le moteur électrique 16 pour mettre en rotation l'outil de travail 7 est plus important, et le courant d'alimentation du moteur électrique est alors plus élevé que la valeur de seuil prédéterminée Is.

Ainsi, l'unité de commande 21 peut aisément détecter la présence ou non de l'outil de travail 7 dans la cuve de cuisson 4 en comparant la valeur du courant d'alimentation du moteur électrique 16 avec la valeur de seuil prédéterminée Is. En particulier, si le courant d'alimentation du moteur électrique 16 est inférieur ou égal à la valeur de seuil prédéterminée Is, alors l'unité de commande 21 détecte l'absence de l'outil de travail 7 dans la cuve de cuisson 4, et si le courant d'alimentation du moteur électrique 16 est supérieur à la valeur de seuil prédéterminée Is, alors l'unité de commande 21 détecte la présence de l'outil de travail 7 dans la cuve de cuisson 4.

A la fin de cette deuxième période T2, on peut apercevoir que le courant d'alimentation du moteur électrique 16 augmente de manière significative jusqu'à atteindre une valeur seuil de prévention de blocage de moteur Im. Cette augmentation du courant se traduit par une difficulté croissante qu'a l'outil de travail 7 pour entrainer le ou les ingrédients. La valeur seuil de prévention de blocage de moteur Im prédit qu'un blocage en rotation de l'outil de travail 7 peut prochainement survenir.

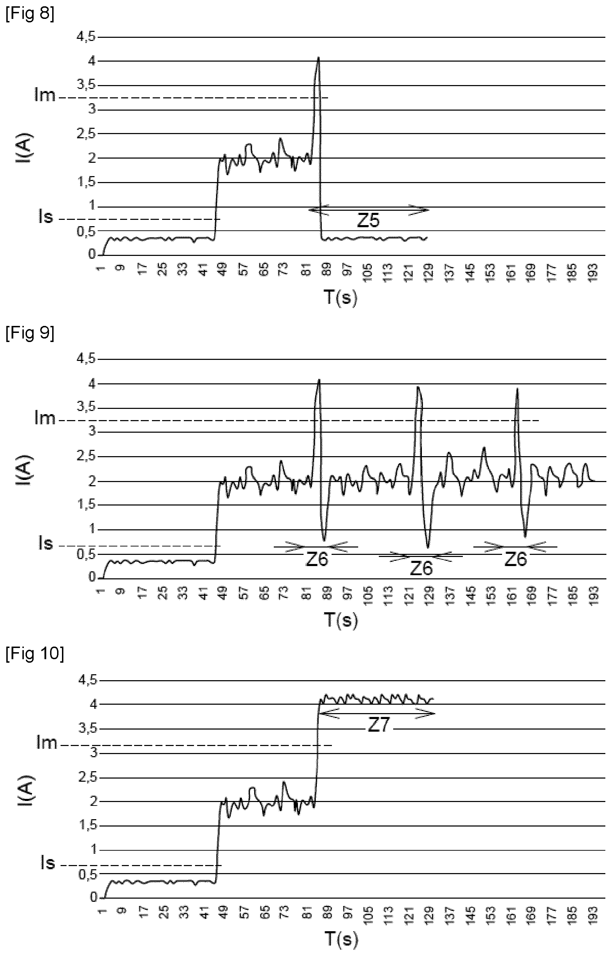

La troisième période T3 débute lorsque le courant a atteint la valeur seuil de prévention de blocage de moteur Im. Au cours de cette troisième période T3, des actions peuvent être mises en œuvre pour prévenir le blocage de l'outil de travail 7. Certaines de ces actions sont illustrées aux figures 8 et 9 décrites ci-après.

De façon avantageuse, l'unité de commande 21 est configurée pour émettre un signal d'avertissement, par exemple sonore ou visuel, lorsque la présence de l'outil de travail 7 dans la cuve de cuisson 4 n'est pas détectée par l'unité de commande 21 (ou lorsque l'absence de l'outil de travail 7 dans la cuve de cuisson 4 est détectée par l'unité de commande 21), alors que la phase de fonctionnement en cours de l'appareil de cuisson électrique 2 correspond à une phase de fonctionnement nécessitant la présence de l'outil de travail 7.

Le signal d'avertissement peut par exemple être affiché sur un écran d'affichage de l'appareil de cuisson électrique 2, ou être transmis à un ordiphone de l'utilisateur.

Dans un mode de réalisation de l'invention, l'unité de commande 21 peut être configurée pour commander un arrêt du moteur électrique 16, ou un arrêt du moteur électrique 16 et un arrêt du dispositif de chauffage 5, lorsque la présence de l'outil de travail 7 dans la cuve de cuisson 4 n'est pas détectée par l'unité de commande 21.

De façon avantageuse, l'unité de commande 21 est également configurée pour modifier un paramètre de rotation du moteur électrique 16, par exemple l'arrêt du moteur électrique 16 ou la vitesse de rotation du moteur électrique 16 et/ou le sens de rotation du moteur électrique 16, lorsque le courant d'alimentation du moteur électrique 16 atteint ou dépasse la valeur seuil de prévention de blocage de moteur Im.

En particulier, l'unité de commande 21 est configurée pour inverser un sens de rotation du moteur électrique 16 lorsque le courant d'alimentation du moteur électrique 16 atteint ou dépasse une valeur seuil de prévention de blocage de moteur Im qui est supérieure à la valeur de seuil prédéterminée Is, par exemple pendant une durée d'inversion prédéterminée à partir de l'instant où le courant d'alimentation du moteur électrique 16 atteint ou dépasse une valeur seuil de prévention de blocage de moteur Im, et pour inverser de nouveau le sens de rotation du moteur électrique 16 après l'écoulement de la durée d'inversion prédéterminée. Ces dispositions permettent de limiter un blocage en rotation du moteur électrique 16, en raison par exemple d'une agglomération d'aliments dans la cuve de cuisson 4 qui bloquerait en rotation l'outil de travail 7, et donc de préserver l'intégrité du moteur électrique 16. En particulier, une rotation en sens inverse du moteur électrique 16, et donc de l'outil de travail, permet de défaire des blocs d'aliments formés dans la cuve de cuisson 4.

Selon un autre mode de réalisation de l'invention, l'unité de commande 21 est configurée pour commander un arrêt du moteur électrique 16, ou un arrêt du moteur électrique 16 et un arrêt du dispositif de chauffage 5, ou bien réduire la vitesse du moteur électrique 16, lorsque le courant d'alimentation du moteur électrique 16 atteint ou dépasse la valeur seuil de prévention de blocage de moteur Im, afin également d'éviter un blocage en rotation du moteur électrique 16.

La figure 7 représente l'évolution du courant d'alimentation du moteur électrique 16 lors d'une cuisson d'oignons émincés.

Le courant d'alimentation du moteur électrique 16 peut par exemple être déterminé par calcul en mesurant la tension aux bornes d'une résistance calibrée 22 (voir la figure 5), telle qu'une résistance de shunt montée en série avec le moteur électrique 16.

Au cours d'une période Z1, l'outil de travail 7 n'est pas disposé dans la cuve de cuisson 4. Au cours de cette période Z1, le courant électrique reste inférieur à la valeur de seuil prédéterminée Is.

L'utilisateur dispose ensuite l'outil de travail dans la cuve de cuisson 4. Le courant moteur nécessaire à l'entrainement de l'outil de travail 7 augmente significativement pour se stabiliser au cours d'une deuxième période Z2 autour d'une valeur de courant moteur à vide Iv nécessaire au seul entrainement de l'outil de travail 7.

L'unité de commande 21 peut ainsi être configurée pour détecter la présence de l'outil de travail 7 dans la cuve de cuisson 4 lorsque le courant d'alimentation du moteur électrique 16 atteint ou dépasse une valeur de seuil prédéterminée Is.

Au cours d'une troisième période Z3, les oignons émincés ont été placés dans la cuve de cuisson 4. Au cours de cette troisième période Z3, l'action des oignons émincés sur l'outil de travail 7 engendre une légère résistance à la rotation de l'outil de travail et donc une légère augmentation du courant d'alimentation du moteur électrique 16, qui se stabilise autour d'une valeur de courant Ipc pour des oignons pas cuits. Au cours de cette troisième période Z3, les oignons émincés ne sont pas agglomérés, de telle sorte que le couple nécessaire pour entraîner en rotation l'outil de travail 7 est faible.

Dès que les oignons sont cuits, ces derniers sont plus mous qu'au départ et ont tendance à s'agglomérer en tas. Il en résulte une plus grande résistance à la rotation de l'outil de travail 7, entrainant une élévation du couple nécessaire pour entraîner en rotation l'outil de travail 7, et donc une élévation du courant d'alimentation du moteur électrique 16 qui se stabilise pendant une quatrième période Z4 autour d'une valeur de courant Ic pour des oignons cuits.

L'unité de commande 21 est alors configurée pour déterminer l'état de transformation de la consistance des oignons et va ajuster les paramètres de fonctionnement de l'appareil de cuisson électrique 2.

Dans ce cas précis, l'instant correspondant à une cuisson optimale des oignons émincés correspond à cette transformation de l'état des oignons depuis leur état non cuit vers leur état cuit et donc à la transition de la troisième période Z3 vers la quatrième période Z4.

Dès la détection de cette cuisson optimale des oignons émincés, l'unité de commande 21 peut par exemple être configurée pour désactiver le dispositif de chauffage 5 et pour émettre un signal d'avertissement afin de prévenir l'utilisateur que les oignons émincés sont cuits.

Les figures 8 à 10 sont des diagrammes représentant l'évolution dans le temps du courant d'alimentation du moteur électrique lorsque survient un événement particulier sur l'outil de travail 7. Les valeurs indiquées en ampères résultent de l'amplification du signal représentant l'intensité du courant d'alimentation du moteur selon un coefficient d'amplification prédéterminé.

La figure 8 est un diagramme représentant l'évolution dans le temps du courant d'alimentation du moteur électrique 16 lorsque survient un décrochage d'un outil de travail magnétique.

Comme on peut le voir sur cette figure, avant positionnement de l'outil de travail 7 dans la cuve de cuisson 4, le courant moteur nécessaire à l'entrainement du moteur électrique 16 produit un signal amplifié inférieur à 0,5 A.

Lorsque l'outil de travail 7 est disposé dans la cuve de cuisson 4, le courant moteur nécessaire à l'entrainement du moteur électrique 16, de l'outil de travail 7 et des ingrédients disposés dans la cuve de cuisson 4 produit un signal amplifié d'environ 2 A.

Lorsque l'outil de travail 7 présente une résistance à la rotation alors on constate un accroissement rapide du courant électrique allant au-delà de la valeur seuil de prévention de blocage de moteur Im ou de décrochage.

En dépassant cette valeur seuil de prévention de blocage de moteur Im ou de décrochage, l'outil de travail 7 magnétique finit par décrocher.

Le courant moteur va alors décroitre rapidement jusqu'à se stabiliser pendant une période Z5 à sa valeur initiale nécessaire à l'entrainement du moteur électrique 16 avant positionnement de l'outil de travail 7 dans la cuve de cuisson 4.

La figure 9 est un diagramme représentant l'évolution dans le temps du courant d'alimentation du moteur électrique 16 lorsque survient un décrochage puis un raccrochage d'un outil de travail 7 magnétique.

Comme on peut le voir sur cette figure, après le décrochage, le moteur électrique 16, qui continue de tourner, fini par raccrocher l'outil de travail 7.

Le courant moteur va alors croitre rapidement jusqu'à atteindre sa valeur nécessaire à l'entrainement du moteur électrique 16 de l'outil de travail 7 et des ingrédients disposés dans la cuve de cuisson 4.

Plusieurs périodes Z6 de décrochage et de raccrochage peuvent ainsi avoir lieu au cours de la réalisation d'une même étape de recette de cuisine.

Selon un mode de réalisation de l'invention non représenté sur les figures, l'outil de travail 7 comporte un unique bras de travail 8, et la cuve de cuisson 4 comporte un pion de centrage qui s'étend à partir de la paroi de fond 6 de la cuve de cuisson 4 et qui est configuré pour coopérer avec l'outil de travail 7 de manière à centrer l'outil de travail 7 dans la cuve de cuisson 4.

Selon un autre mode de réalisation de l'invention, le système d'entraînement 11 comporte un arbre d'entraînement qui est couplé en rotation au moteur électrique 16 et qui est configuré pour être couplé en rotation directement à l'outil de travail 7. L'arbre d'entraînement peut par exemple être formé par un arbre de sortie du moteur électrique 16. L'outil de travail 7 est ainsi lié mécaniquement au moteur électrique 16 d'entraînement

La figure 10 est un diagramme représentant l'évolution dans le temps du courant d'alimentation du moteur électrique lorsque survient un blocage d'un outil de travail 7 lié mécaniquement au moteur électrique 16 d'entraînement.

Comme illustré sur cette figure, après un blocage, le courant moteur va rapidement augmenter pour générer un signal amplifié allant de 2 A à 4 A au-delà de la valeur seuil de prévention de blocage de moteur Im, puis se stabiliser sur cette valeur de signal amplifié de 4 A pendant une période Z7.

Au cours de cette période Z7, le moteur électrique 16 est en pleine charge, il convient donc de réaliser une action sur le moteur afin de soulager sa charge.

Une telle action peut simplement être un arrêt du moteur avec une communication de mise en défaut à destination de l'utilisateur.

Il est également possible d'inverser le sens de rotation du moteur pendant une durée prédéterminée puis de re-inverser le sens de rotation du moteur électrique 16 en espérant que cela résolve le problème de blocage.

Bien entendu, la présente invention n'est nullement limitée aux modes de réalisation décrits et illustrés qui n'ont été donnés qu'à titre d'exemples. Des modifications restent possibles, notamment du point de vue de la constitution des divers éléments sans sortir pour autant du domaine de protection de l'invention telle que définie dans les revendications.

## Revendications

1. Appareil de cuisson électrique (2) sous pression, tel qu'un autocuiseur électrique ou un multicuiseur électrique avec pression comprenant :
- un boîtier (3) agencé pour recevoir une cuve de cuisson (4),
- une interface de sélection et/ou de paramétrage d'au moins une recette de cuisine, l'au moins une recette de cuisine étant associée d'une part à une nature et à une quantité du ou des ingrédients de l'au moins une recette de cuisine et d'autre part à des paramètres de fonctionnement de l'appareil de cuisson électrique (2),
- un outil de travail (7) monté mobile en rotation dans la cuve de cuisson (4) et configuré pour travailler un ou des ingrédients contenus dans la cuve de cuisson (4),
- un système d'entraînement (11) comportant un moteur électrique (16) configuré pour entraîner en rotation l'outil de travail (7), et
- une unité de commande (21) configurée pour commander le fonctionnement de l'appareil de cuisson électrique (2) en appliquant les paramètres de fonctionnement associés à l'au moins une recette de cuisine sélectionnée et/ou paramétrée à partir de l'interface de sélection, l'unité de commande (21) étant configurée pour surveiller, au cours de la réalisation d'au moins une étape de l'au moins une recette de cuisine sélectionnée et/ou paramétrée, une valeur déterminable représentative d'un paramètre de fonctionnement du moteur électrique (16) au cours d'un cycle de fonctionnement du moteur électrique (16),
l'unité de commande (21) étant configurée pour déterminer un état de transformation de la consistance du ou des ingrédients contenus dans la cuve de cuisson (4) en fonction du dépassement d'un seuil prédéterminé de la valeur déterminable représentative du paramètre de fonctionnement du moteur électrique (16) et pour au moins ajuster les paramètres de fonctionnement de l'appareil de cuisson électrique (2) à la recette de cuisine sélectionnée et/ou paramétrée en fonction de ce dépassement de seuil prédéterminé de la valeur déterminable représentative du paramètre de fonctionnement du moteur électrique (16), **caractérisé en ce que** l'unité de commande (21) est en outre configurée pour détecter la présence de l'outil de travail (7) dans la cuve de cuisson (4) lorsque la valeur déterminable représentative du paramètre de fonctionnement du moteur électrique (16) atteint ou dépasse une valeur de seuil prédéterminée (Is).

2. Appareil de cuisson électrique (2) selon la revendication 1, dans lequel l'au moins un paramètre de fonctionnement comporte au moins un paramètre parmi la vitesse de rotation du moteur électrique (16), le sens de rotation du moteur électrique (16), l'activation ou la mise en pause de rotation du moteur électrique (16), la température de chauffage, la durée de chauffage, l'humidité dans la cuve de cuisson (4), la pression dans la cuve de cuisson (4).

3. Appareil de cuisson électrique (2) selon la revendication 2, dans lequel l'unité de commande (21) est configurée pour émettre un signal d'avertissement lorsque la présence de l'outil de travail (7) dans la cuve de cuisson (4) n'est pas détectée par l'unité de commande (21).

4. Appareil de cuisson électrique (2) selon l'une quelconque des revendications 1 à 3, dans lequel l'unité de commande (21) est configurée pour détecter un avancement de cuisson optimal du ou des ingrédients contenus dans la cuve de cuisson (4) lorsque la valeur déterminable représentative du paramètre de fonctionnement du moteur électrique (16) atteint ou dépasse un seuil prédéterminé qui est représentatif d'une consistance optimale du ou des ingrédients pour la recette de cuisine sélectionnée et/ou paramétrée par l'utilisateur.

5. Appareil de cuisson électrique (2) selon l'une quelconque des revendications 1 à 4, dans lequel l'unité de commande (21) est configurée pour commander un arrêt du moteur électrique (16), ou un arrêt du moteur électrique (16) et un arrêt d'un dispositif de chauffage (5), ou réduire la vitesse du moteur électrique (16), ou bien pour inverser le sens de rotation du moteur électrique (16), lorsque la valeur déterminable représentative du paramètre de fonctionnement du moteur électrique (16) atteint ou dépasse une valeur seuil de prévention de blocage de moteur (Im).

6. Appareil de cuisson électrique (2) selon la revendication 5, dans lequel l'unité de commande (21) est configurée pour inverser un sens de rotation du moteur électrique (16) pendant une durée d'inversion prédéterminée à partir d'un instant où la valeur déterminable représentative du paramètre de fonctionnement du moteur électrique (16) a atteint ou dépassé une valeur seuil de prévention de blocage de moteur (Im).

7. Appareil de cuisson électrique (2) selon l'une quelconque des revendications 1 à 6, dans lequel la valeur déterminable représentative du paramètre de fonctionnement du moteur électrique (16) est choisie parmi le courant d'alimentation du moteur électrique (16), la moyenne glissante du courant d'alimentation du moteur électrique (16), la variation dans le temps du courant d'alimentation du moteur électrique (16), le couple moteur, ou une variation dans le temps du couple moteur.

8. Appareil de cuisson électrique (2) selon l'une quelconque des revendications 1 à 7, dans lequel le système d'entraînement (11) comprend une couronne périphérique (12) s'étendant autour d'une paroi latérale (10) de la cuve de cuisson (4), au moins un premier dispositif magnétique permanent (18) fixé à la couronne périphérique (12), et au moins un deuxième dispositif magnétique permanent (20) fixé à l'outil de travail (7) et configuré pour coopérer avec l'au moins un premier dispositif magnétique permanent (18), le moteur électrique (16) étant configuré pour entraîner en rotation la couronne périphérique (12) autour de la paroi latérale (10) de la cuve de cuisson (4).

9. Appareil de cuisson électrique (2) selon la revendication 8, dans lequel l'unité de commande (21) est configurée pour détecter un désaccouplement de l'au moins un premier dispositif magnétique permanent fixé à la couronne périphérique (12), et de l'au moins un deuxième dispositif magnétique permanent fixé à l'outil de travail (7).

10. Appareil de cuisson électrique (2) selon la revendication 9, dans lequel l'unité de commande (21), après avoir détecté un désaccouplement, est configurée pour détecter un ré-accouplement de l'au moins un premier dispositif magnétique permanent fixé à la couronne périphérique (12), et de l'au moins un deuxième dispositif magnétique permanent fixé à l'outil de travail (7).

11. Appareil de cuisson électrique (2) selon l'une des revendications 1 à 10 dans lequel le moteur électrique (16) et l'outil de travail (7) sont reliés par un axe d'entrainement mécanique traversant la cuve de cuisson (4).

12. Appareil de cuisson électrique (2) selon l'une des revendications 1 à 11, dans lequel l'au moins une recette de cuisine est stockée dans une mémoire de l'appareil de cuisson électrique (2) ou bien sur un serveur distant, l'appareil de cuisson électrique (2) comprenant des moyens de communication pour communiquer avec le serveur distant.

13. Appareil de cuisson électrique (2) selon l'une des revendications 1 à 12, dans lequel l'unité de commande (21) est configurée pour déterminer une quantité d'un aliment déterminé disposé dans la cuve de cuisson (4).

## Patentansprüche

1. Elektrisches Druckkochgerät (2) wie ein elektrischer Schnellkochtopf oder ein elektrischer Multikocher mit Druck, umfassend:
- ein Gehäuse (3), angeordnet, um ein Kochgefäß (4) aufzunehmen,
- eine Schnittstelle zur Auswahl und/oder Parametrierung von mindestens einem Küchenrezept, wobei das mindestens eine Küchenrezept einerseits mit einer Art und einer Menge der Zutat oder der Zutaten des mindestens einen Küchenrezepts und andererseits mit Funktionsparametern des elektrischen Kochgeräts (2) assoziiert ist,
- ein drehbeweglich in dem Kochgefäß (4) montiertes und zum Verarbeiten einer Zutat oder Zutaten, die in dem Kochgefäß (4) enthalten sind, konfiguriertes Arbeitswerkzeug (7)
- ein Antriebssystem (11), umfassend einen elektrischen Motor (16), konfiguriert zum Drehantrieb des Arbeitswerkzeugs (7), und
- eine Steuereinheit (21), konfiguriert zum Steuern der Funktionsweise des elektrischen Kochgeräts (2), indem die mit dem mindestens einen aus der Schnittstelle ausgewählten und/oder parametrierten Küchenrezept assoziierten Funktionsparameter angewendet werden, wobei die Steuereinheit (21) konfiguriert ist, um im Laufe der Durchführung von mindestens einem Schritt des mindestens einen ausgewählten und/oder parametrierten Küchenrezepts einen bestimmbaren Wert zu überwachen, der für einen Funktionsparameter des elektrischen Motors (16) im Laufe eines Funktionszyklus des elektrischen Motors (16) repräsentativ ist,
wobei die Steuereinheit (21) konfiguriert ist, um einen Transformationszustand der Konsistenz der Zutat oder der Zutaten, die in dem Kochgefäß (4) enthalten sind, in Funktion des Überschreitens eines vorbestimmten Schwellenwerts des bestimmbaren Werts zu bestimmen, der für den Funktionsparameter des elektrischen Motors (16) repräsentativ ist, und um mindestens die Funktionsparameter des elektrischen Kochgeräts (2) an das ausgewählte und/oder parametrierte Küchenrezept in Funktion dieses Überschreitens des vorbestimmten Schwellenwerts des bestimmbaren Werts anzupassen, der für den Funktionsparameter des elektrischen Motors (16) repräsentativ ist, **dadurch gekennzeichnet, dass** die Steuereinheit (21) des Weiteren konfiguriert ist zum Erkennen der Anwesenheit des Arbeitswerkzeugs (7) in dem Kochgefäß (4), wenn der bestimmbare Wert, der für den Funktionsparameter des elektrischen Motors (16) repräsentativ ist, einen vorbestimmten Schwellenwert (Is) erreicht oder überschreitet.

2. Elektrisches Kochgerät (2) nach Anspruch 1, wobei der mindestens eine Funktionsparameter mindestens einen Parameter umfasst unter der Drehgeschwindigkeit des elektrischen Motors (16), der Drehrichtung des elektrischen Motors (16), der Aktivierung oder des Pausierens der Drehung des elektrischen Motors (16), der Erwärmungstemperatur, der Erwärmungsdauer, der Feuchtigkeit in dem Kochgefäß (4), dem Druck in dem Kochgefäß (4).

3. Elektrisches Kochgerät (2) nach Anspruch 2, wobei die Steuereinheit (21) zum Emittieren eines Warnsignals konfiguriert ist, wenn die Anwesenheit des Arbeitswerkzeugs (7) im Kochgefäß (4) nicht von der Steuereinheit (21) erkannt wird.

4. Elektrisches Kochgerät (2) nach einem der Ansprüche 1 bis 3, wobei die Steuereinheit (21) konfiguriert ist zum Erkennen eines optimalen Kochfortschritts der Zutat oder der Zutaten, die in dem Kochgefäß (4) enthalten sind, wenn der bestimmbare Wert, der für den Funktionsparameter des elektrischen Motors (16) repräsentativ ist, einen vorbestimmten Schwellenwert erreicht oder überschreitet, der für eine optimale Konsistenz der Zutat oder der Zutaten für das durch den Anwender ausgewählte und/oder parametrierte Küchenrezept repräsentativ ist.

5. Elektrisches Kochgerät (2) nach einem der Ansprüche 1 bis 4, wobei die Steuereinheit (21) konfiguriert ist zum Steuern eines Anhaltens des elektrischen Motors (16) oder eines Anhaltens des elektrischen Motors (16) und eines Anhaltens einer Erwärmungsvorrichtung (5) oder zum Verringern der Geschwindigkeit des elektrischen Motors (16) oder zum Umkehren der Drehrichtung des elektrischen Motors (16), wenn der bestimmbare Wert, der für den Funktionsparameter des elektrischen Motors (16) repräsentativ ist, einen Schwellenwert zur Verhinderung eines Blockierens des Motors (Im) erreicht oder überschreitet.

6. Elektrisches Kochgerät (2) nach Anspruch 5, wobei die Steuereinheit (21) konfiguriert ist zum Umkehren einer Drehrichtung des elektrischen Motors (16) während einer vorbestimmten Umkehrdauer, ab einem Zeitpunkt, an dem der bestimmbare Wert, der für den Funktionsparameter des elektrischen Motors (16) repräsentativ ist, einen Schwellenwert zur Verhinderung eines Blockierens des Motors (Im) erreicht oder überschritten hat.

7. Elektrisches Kochgerät (2) nach einem der Ansprüche 1 bis 6, wobei der bestimmbare Wert, der für den Funktionsparameter des elektrischen Motors (16) repräsentativ ist, gewählt ist unter dem Versorgungsstrom des elektrischen Motors (16), dem gleitenden Mittelwert des Versorgungsstroms des elektrischen Motors (16), der zeitlichen Variation des Versorgungsstroms des elektrischen Motors (16), dem Motordrehmoment oder einer zeitlichen Variation des Motordrehmoments.

8. Elektrisches Kochgerät (2) nach einem der Ansprüche 1 bis 7, wobei das Antriebssystem (11) einen umlaufenden Kranz (12), der sich um eine Seitenwand (10) des Kochgefäßes (4) herum erstreckt, mindestens eine permanentmagnetische Vorrichtung (18), die an dem umlaufenden Kranz (12) befestigt ist, und mindestens eine zweite permanentmagnetische Vorrichtung (20), die an dem Arbeitsgerät (7) befestigt und konfiguriert ist, um mit der mindestens einen ersten permanentmagnetische Vorrichtung (18) zu kooperieren, umfasst, wobei der elektrische Motor (16) zum Drehantrieb des umlaufenden Kranzes (12) um die Seitenwand (10) des Kochgefäßes (4) herum konfiguriert ist.

9. Elektrisches Kochgerät (2) nach Anspruch 8, wobei die Steuereinheit (21) konfiguriert ist zum Erkennen einer Entkopplung der mindestens einen ersten permanentmagnetischen Vorrichtung, die an dem umlaufenden Kranz (12) befestigt ist, und der mindestens einen zweiten permanentmagnetischen Vorrichtung, die an dem Arbeitsgerät (7) befestigt ist.

10. Elektrisches Kochgerät (2) nach Anspruch 9, wobei die Steuereinheit (21), nachdem eine Entkopplung erkannt worden ist, konfiguriert ist zum erneuten Koppeln der mindestens einen ersten permanentmagnetischen Vorrichtung, die an dem umlaufenden Kranz (12) befestigt ist, und der mindestens einen zweiten permanentmagnetischen Vorrichtung, die an dem Arbeitsgerät (7) befestigt ist.

11. Elektrisches Kochgerät (2) nach einem der Ansprüche 1 bis 10, wobei der elektrische Motor (16) und das Arbeitswerkzeug (7) durch eine Achse zum mechanischen Antrieb verbunden sind, die das Kochgefäß (4) durchquert.

12. Elektrisches Kochgerät (2) nach einem der Ansprüche 1 bis 11, wobei das mindestens eine Küchenrezept in einem Speicher des elektrischen Kochgeräts (2) oder auf einem entfernten Server gespeichert ist, wobei das elektrische Kochgerät (2) Kommunikationsmittel zum Kommunizieren mit dem entfernten Server umfasst.

13. Elektrisches Kochgerät (2) nach einem der Ansprüche 1 bis 12, wobei die Steuereinheit (21) konfiguriert ist zum Bestimmen einer Menge eines bestimmten Lebensmittels, das in dem Kochgefäß (4) angeordnet ist.

## Claims

1. Electric pressure cooking appliance (2), such as an electric pressure cooker or an electric pressure multi-cooker, comprising:
- a housing (3) designed to receive a cooking vessel (4),
- an interface for selecting and/or parameterizing at least one cooking recipe, the at least one cooking recipe being associated, on the one hand, with a type and quantity of the ingredient(s) of the at least one cooking recipe and, on the other hand, with operating parameters of the electric cooking appliance (2),
- a working tool (7) rotatably mounted in the cooking vessel (4) and configured to work on one or more ingredients contained in the cooking vessel (4),
- a drive system (11) comprising an electric motor (16) configured to drive the working tool (7) in rotation, and
- a control unit (21) configured to control the operation of the electric cooking appliance (2) by applying the operating parameters associated with the at least one cooking recipe selected and/or parameterized from the selection interface, the control unit (21) being configured to monitor, during the performance of at least one step of the at least one selected and/or parameterized cooking recipe, a determinable value representative of an operating parameter of the electric motor (16) during an operating cycle of the electric motor (16),
the control unit (21) being configured to determine a state of transformation of the consistency of the ingredient(s) contained in the cooking vessel (4) as a function of exceeding a predetermined threshold of the determinable value representative of the operating parameter of the electric motor (16) and to at least adjust the operating parameters of the electric cooking appliance (2) to the selected and/or parameterized cooking recipe as a function of this predetermined threshold being exceeded by the determinable value representative of the operating parameter of the electric motor (16), **characterized in that** the control unit (21) is further configured to detect the presence of the working tool (7) in the cooking vessel (4) when the determinable value representative of the operating parameter of the electric motor (16) reaches or exceeds a predetermined threshold value (Is).

2. Electric cooking appliance (2) according to claim 1, wherein the at least one operating parameter comprises at least one parameter from among the speed of rotation of the electric motor (16), the direction of rotation of the electric motor (16), the activation or pausing of rotation of the electric motor (16), the heating temperature, the heating duration, the humidity in the cooking vessel (4), the pressure in the cooking vessel (4).

3. Electric cooking appliance (2) according to claim 2, wherein the control unit (21) is configured to emit a warning signal when the presence of the working tool (7) in the cooking vessel (4) is not detected by the control unit (21).

4. Electric cooking appliance (2) according to any of claims 1 to 3, wherein the control unit (21) is configured to detect an optimum cooking progress of the ingredient(s) contained in the cooking vessel (4) when the determinable value representative of the operating parameter of the electric motor (16) reaches or exceeds a predetermined threshold which is representative of an optimum consistency of the ingredient(s) for the cooking recipe selected and/or parameterized by the user.

5. Electric cooking appliance (2) according to any of claims 1 to 4, wherein the control unit (21) is configured to control a stop of the electric motor (16), or a stop of the electric motor (16) and a stop of a heating device (5), or to reduce the speed of the electric motor (16), or to reverse the direction of rotation of the electric motor (16), when the determinable value representative of the operating parameter of the electric motor (16) reaches or exceeds a motor lock prevention threshold value (Im).

6. Electric cooking appliance (2) according to claim 5, wherein the control unit (21) is configured to reverse a direction of rotation of the electric motor (16) for a predetermined reversal duration from a point in time when the determinable value representative of the operating parameter of the electric motor (16) has reached or exceeded a motor lock prevention threshold value (Im).

7. Electric cooking appliance (2) according to any of claims 1 to 6, wherein the determinable value representative of the operating parameter of the electric motor (16) is selected from among the supply current of the electric motor (16), the moving average of the supply current of the electric motor (16), the variation over time of the supply current of the electric motor (16), the motor torque, or a variation over time of the motor torque.

8. Electric cooking appliance (2) according to any of claims 1 to 7, wherein the drive system (11) comprises a peripheral ring (12) extending around a side wall (10) of the cooking vessel (4), at least one first permanent magnetic device (18) attached to the peripheral ring (12), and at least one second permanent magnetic device (20) attached to the working tool (7) and configured to cooperate with the at least one first permanent magnetic device (18), the electric motor (16) being configured to drive the peripheral ring (12) in rotation around the side wall (10) of the cooking vessel (4).

9. Electric cooking appliance (2) according to claim 8, wherein the control unit (21) is configured to detect uncoupling of the at least one first permanent magnetic device attached to the peripheral ring (12), and of the at least one second permanent magnetic device attached to the working tool (7).

10. Electric cooking appliance (2) according to claim 9, wherein the control unit (21), after detecting uncoupling, is configured to detect re-coupling of the at least one first permanent magnetic device attached to the peripheral ring (12), and of the at least one second permanent magnetic device attached to the working tool (7).

11. Electric cooking appliance (2) according to any of claims 1 to 10, wherein the electric motor (16) and the working tool (7) are connected by a mechanical drive shaft passing through the cooking vessel (4).

12. Electric cooking appliance (2) according to any of claims 1 to 11, wherein the at least one cooking recipe is stored in a memory of the electric cooking appliance (2) or on a remote server, the electric cooking appliance (2) comprising communication means for communicating with the remote server.

13. Electric cooking appliance (2) according to any of claims 1 to 12, wherein the control unit (21) is configured to determine a quantity of a particular food arranged in the cooking vessel (4).
